# EUROPÄISCHE PATENTSCHRIFT

(11) **EP 1 650 961 B1**
(45) Veröffentlichungstag und Bekanntmachung des Hinweises auf die Patenterteilung: **22.06.2011**
(21) Anmeldenummer: 05022026.8
(22) Anmeldetag: 10.10.2005
(51) Int. Cl.: H04N 5/445

(54) **Verfahren und System zur Bereitstellung von Multimedia-Daten**
System and method for providing multi-media data
Procédé et système pour la provision des données multi-media

(30) Priorität: 22.10.2004 DE 102004051668
(43) Veröffentlichungstag der Anmeldung: 26.04.2006
(73) Patentinhaber: yodoba AG, 8006 Zürich (CH)
(72) Erfinder: Attinger, Thomas, 5621 Zufikon (CH)
(74) Vertreter: Röthinger, Rainer

(56) Entgegenhaltungen:
- US-A1- 2003 046 702
- US-A1- 2003 196 204

## Beschreibung

Die vorliegende Erfindung betrifft ein Verfahren und ein System zur Bereitstellung von Multimedia-Daten in einer einem Multimedia-Gerät zugeordneten Baugruppe.

Heutzutage verändern sich die Ansprüche an die persönliche Freizeitgestaltung ständig, was sich u.a. auch deutlich auf die Fernsehgewohnheiten der Bevölkerung in der Freizeit auswirkt. Eine dieser Auswirkungen ist unter dem Schlagwort "Video On Demand" thematisiert, bei der die technischen Rahmenbedingungen der Telekommunikation in einer Weise geschaffen werden, dass ein Fernsehbenutzer mittels eines Zusätzgeräts, einer sogenannten Setup Box, den gerade von ihm gewünschten Film auswählen, die Multimedia-Daten in der Regel kostenpflichtig downloaden und den Film ansehen kann. Hinter diesem vergleichsweise einfachen Wunsch steckt eine vergleichsweise aufwendige Technologie, die einerseits die gewünschten Daten schnell und mit hoher Auflösung zur Verfügung stellen und andererseits geeignete verrechnungswerkzeuge in dieses Abrufen von Filmen einbinden muss.

Ein weiteres aus dem veränderten Freizeitverhalten ableitbares Bedürfnis kann in dem Wunsch bestehen, verpasste Sendungen am Fernsehen später ansehen zu können. Als bisher einzigallein wirkungsvollste Massnahme kann hier nur das Aufzeichnen der Sendung auf einem Videorecorder oder einem digitalen Speicher, wie Festplatte, DVD usw., angegeben werden. Dieses Aufzeichnen setzt jedoch voraus, dass sich der Fernsehbenutzer im Voraus mit dem Programm beschäftigt hat und die ihn interessierenden Sendungen selektiert und sein Aufzeichnungsgerät entsprechend programmiert hat. Sieht man dabei selbst einmal von der in der Regel nicht-trivialen Programmierung des Aufzeichnungsgeräts ab, zeichnet sich dieses Verfahren leider nur durch eine stark begrenzte Flexibilität hinsichtlich eines Änderungswunsches aus oder versagt diesbezüglich sogar ganz, wenn der Benutzer nicht zur Umprogrammierung des Aufzeichnungsgeräts in der Lage ist, beispielsweise aufgrund einer dienst- oder urlaubsbedingten Abwesenheit.

Ein weiteres bisher überhaupt nicht befriedigbares Bedürfnis besteht darin, sich in laufende Sendungen einklinken zu können und diese von Anfang an zeitversetzt sehen zu können. Ausgenommen sind hierbei natürlich Sendungen, die von den Fernsehkanälen wiederholt ausgestrahlt werden, wobei der einzelne Fernsehzuschauer hier keinerlei Einfluss auf den Sendezeitpunkt der Wiederholung hat.

Die US-Anmeldung 2003/0046702 beschreibt einen Programm-Server und einen zugehörigen Empfänger zur zusammenhängenden Aufzeichnung bzw. Wiedergabe eines gesendeten Programms. Funktionen zur Wiedergabe des gespeicherten Programms ähneln der Wiedergabe eines auf einem Videoband aufgezeichneten Programms.

Die US-Patentanmeldung 2003/0196204 A1 beschreibt eine Technik zum Handeln mit Medieninhalten, wobei ein Verteilersystem die von mehreren Anbietern vorgehaltenen Medieninhalte in einem Angebot beschreibt und das Angebot einem Kundengerät bereitstellt.

Der vorliegenden Erfindung liegt daher die Aufgabe zugrunde, ein Verfahren und ein System zur Bereitstellung von Multimedia-Daten, insbesondere von Video- und/oder Audio-Daten, anzugeben, mit denen es möglich ist, sehr viel individuellere Multimediabedürfnisse, insbesondere Fernsehbedürfnisse, als bisher möglich befriedigen zu können.

Diese vorstehend genannte Aufgabe wird bezüglich des Verfahrens erfindungsgemäss gelöst durch jeden der unabhängigen Ansprüche 1 und 6.

Ferner kann ein Verfahren zur Bereitstellung von Multimedia-Daten in einer einem Multimedia-Gerät zugeordneten Baugruppe mit den folgenden Schritten ausgeführt werden:
a) Sendungen und/oder Teilsendungen eines Fernsehkanals werden in einer Anzahl von Multimedia-Datenfiles mit jeweils eindeutiger sendungs- bzw. teilsendungsspezifischer Kennzeichnung auf einem Server gespeichert;
b) die Baugruppe unterstützt einen Client, mittels dessen die gespeicherten Sendungen und/oder gespeicherten Teilsendungen an dem Multimedia-Gerät ausgewählt werden;
c) aufgrund der vorherigen Auswahl werden eines oder mehrere der Multimedia-Datenfiles aufgrund ihrer eindeutigen Kennzeichnung vom Server abgerufen, wobei
d) die in dem Multimedia-Datenfile gespeicherte Sendung bzw. Teilsendung wird zu deren Neustart am Multimedia- Gerät bereitgestellt, oder
e) ein in den Datenfiles gespeichertes Fernsehprogramm des Fernsehkanals wird beginnend mit der ausgewählten Sendung bzw. Teilsendung mit einer Zeitverzögerung, die mindestens so gross ist, wie die Differenz zwischen der tatsächlichen Sendezeit und dem Auswählzeitpunkt, am Multimedia-Gerät bereitgestellt.

Bezüglich des Systems wird die vorstehend beschriebene Aufgabe erfindungsgemäss gelöst durch jeden der unabhängigen Ansprüche 11 und 16

Ferner kann ein System zur Bereitstellung von Multimedia-Daten in einer einem Multimedia-Gerät zugeordneten Baugruppe mit den folgenden Merkmalen vorgesehen sein:
a) einem Server, auf dem Sendungen und/oder Teilsendungen eines Fernsehkanals in einer Anzahl von Multimedia-Datenfiles mit jeweils eindeutiger sendungs- bzw. teilsendungsspezifischer Kennzeichnung speicherbar sind;
b) einem von der Baugruppe unterstützten Client, mittels dessen die gespeicherten Sendungen und/oder gespeicherten Teilsendungen an dem Multimedia-Gerät auswählbar sind;
c) einem Datenübermittlungssystem, mittels dessen aufgrund der vorherigen Auswahl eines oder mehrerer der Multimedia-Datenfiles aufgrund ihrer eindeutigen Kennzeichnung von dem Server zu der Baugruppe transferierbar sind, wobei
d) die Baugruppe und/oder der Client weiter so ausgestaltet sind, dass die in dem Multimedia-Datenfile gespeicherte Sendung bzw. Teilsendung zu deren Neustart am Multimedia-Gerät bereitstellbar ist, und/oder
e) die Baugruppe und/oder der Client weiter so ausgestaltet sind, dass ein in den Datenfiles gespeichertes Fernsehprogramm des Fernsehkanals beginnend mit der ausgewählten Sendung bzw. Teilsendung mit einer Zeitverzögerung, die mindestens so gross ist, wie die Differenz zwischen der tatsächlichen Sendezeit und dem Auswählzeitpunkt, am Multimedia-Gerät bereitstellbar ist.

Auf diese Weise ist es möglich, dass der Fernsehbenutzer über ein vergleichsweise einfach auszugestaltendes Menü (dieses wird ja vom Client bereitgestellt) die von ihm gewünschte Fernsehsendung ganz oder teilweise von dem Server aufrufen und anschliessend anschauen kann. Die einzige wirkliche Voraussetzung dafür ist nur, dass der Fernsehkanal, welcher die gewünschte Sendung ausgestrahlt hat, von dem Server aufgezeichnet wird.

Eine besonders einfache Art der Datenübertragung kann dabei in Ausgestaltung der Erfindung darin beruhen, dass die Bereitstellung der ausgewählten Sendungen bzw. Teilsendungen im Zuge eines im wesentlichen kontinuierlichen Datentransports durchgeführt wird. Mit anderen Worten heisst dies nichts anderes als die zeitversetzte individuelle nochmalige Aussendung der ausgewählten Sendung über ein der Baugruppe zugängliches Telekommunikationsnetzwerk, also beispielsweise das Kabelnetz, eine Stromversorgungsleitung oder eine Telefonleitung mit entsprechender Bandbreite, wie xDSL, ADSL und dergleichen, oder mittels einer drahtlosen Übertragung, wie z.B. WLL (Wireless Local Loop).

Alternativ hierzu kann es aber vorgesehen sein, die Bereitstellung der ausgewählten Sendungen bzw. Teilsendungen im Zuge eines Downloads der entsprechenden Multimedia-Datenfiles durchzuführen und die ausgewählte Sendung dann von dem Speicher der Baugruppe oder des Multimediageräts lokal abzurufen.

Grundsätzlich kann das erfindungemässe Verfahren (und das System natürlich auch) so weiter ausgestaltet werden, dass die von dem Server übertragenen Daten in der Baugruppe gespeichert werden und mittels des Clients beliebig adressiert werden. Auf diese weise kann bei entsprechender Ausgestaltung des Clients über die einmal gelieferten Daten beliebig verfügt werden, d.h. eine Sendung oder Teile davon können wiederholt angeschaut werden, eine Werbepause kann übersprungen werden und dergleichen.

Eine weitere vorteilhafte Ausgestaltung des Verfahrens kann es vorsehen, mittels des Clients themenbezogene Abonnements von Sendungen und/oder Teilsendungen auswählen zu können. So können beispielsweise die Wetter-, Sport- oder Wirtschaftsmeldungen eines Tages bis zu dem Auswählzeitpunkt zusammengefasst von dem Server abgerufen und mittels der Baugruppe bereitgestellt werden.

In weiterer Ausgestaltung der Erfindung kann es auch möglich sein, mittels des Clients ein benutzerdefiniertes Abonnement zusammenstellen zu können und dem Abonnement entsprechende Multimedia-Datenfiles abrufen und in der Baugruppe bereitstellen zu können. Damit kann der Fernsehnutzer auch ohne Kenntnis des abgelaufenen Programms die ihn interessierenden Sendungen aller Kanäle zusammenfassend übertragen lassen, also zum Beispiel alle Spielfilme eines bestimmten Zeitfensters oder mit einem oder mehreren vorbestimmbaren Schauspielern.

Eine besonders flexible Ausgestaltung der Erfindung ergibt sich weiter, wenn mittels des Clients die Bereitstellung einer Sendung bzw. einer Teilsendung an einer beliebigen Stelle unterbrochen und später an dieser Stelle fortgesetzt werden kann, d.h. die Realisierung einer Pause-Funktion. Alternativ kann die Wiedergabe der ausgewählten Sendung später in weiter fortgeschrittenem Stadium fortgesetzt werden, was der Funktionalität des Vorspulens entspricht.

Zur Vermeidung von Engpässen bei der Bereitstellung der ausgewählten Sendungen am Server kann es zudem vorgesehen sein den Server so zu gestalten, dass eine Sendung und/oder eine Teilsendung in einer von der möglichen Anzahl der Abrufvorgänge abhängigen vervielfachten Form abgespeichert wird. So kann beispielsweise gewissen empirischen Erfahrungen Rechnung getragen werden oder eine Anpassung der zur verfügung stehenden Daten an die bestehenden Abonnements vorgenommen werden.

Weitere vorteilhafte Ausgestaltungen der Erfindung können den übrigen Unteransprüchen entnommen werden.

Ausführungsbeispiele der Erfindung werden nachfolgend anhand einer Zeichnung näher erläutert. Dabei zeigen:
- Figur 1: eine schematische Darstellung eines Systems zur Bereitstellung von Fernsehdaten;
- Figur 2: ein Zeit/Datenmengen-Diagramm mit einer Hervorhebung einer zum Abruf verfügbaren Sendung;
- Figur 3: ein Zeit/Datenmengen-Diagramm mit einer Hervorhebung eines um eine Pause zeitverzögert ausgesendeten Fernsehkanals;

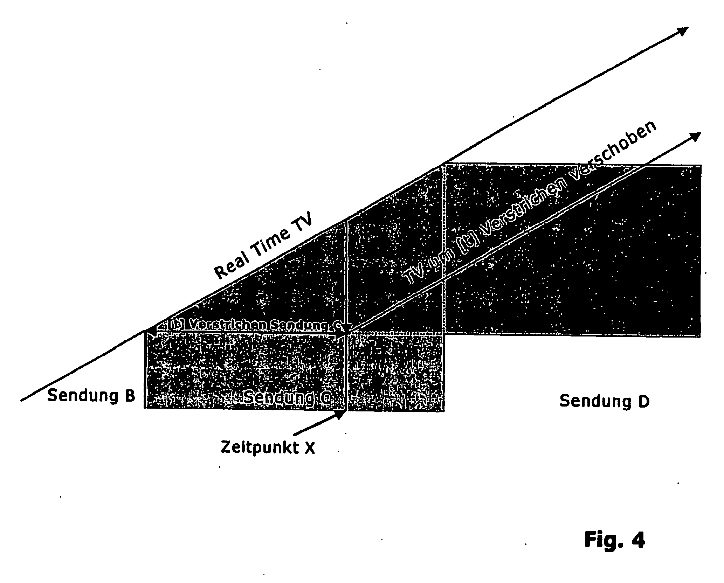

- Figur 4: ein Zeit/Datenmengen-Diagramm mit einer Hervorhebung einer zeitverzögert wiedergegebenen Sendung;
- Figur 5: ein Zeit/Datemnengen-Diagramm mit einer Hervorhebung einer Wiedergebung einer in der Vergangenheit ausgestrahlten Sendung; und
- Figur 6: ein Zeit/Datenmengen-Diagramm mit einer Hervorhebung einer Möglichkeit, Konsumenteninformationssendungen zeitlich fix auszustrahlen/zu übertragen unabhängig davon welche Sendung/Teilsendung sich der Konsument gerade ansieht.

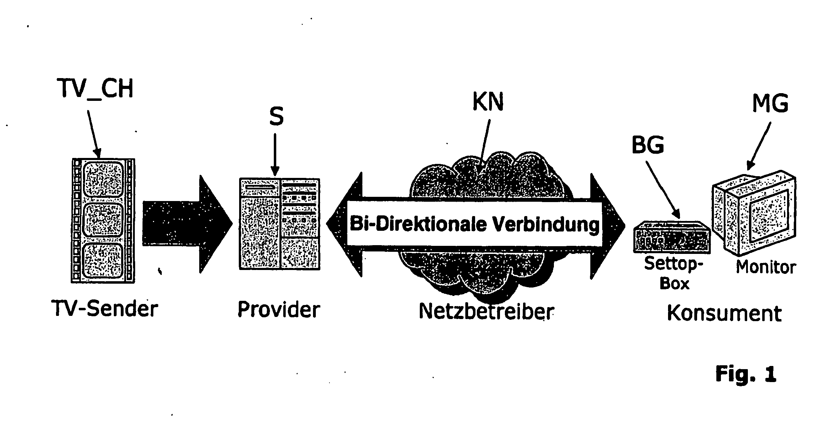

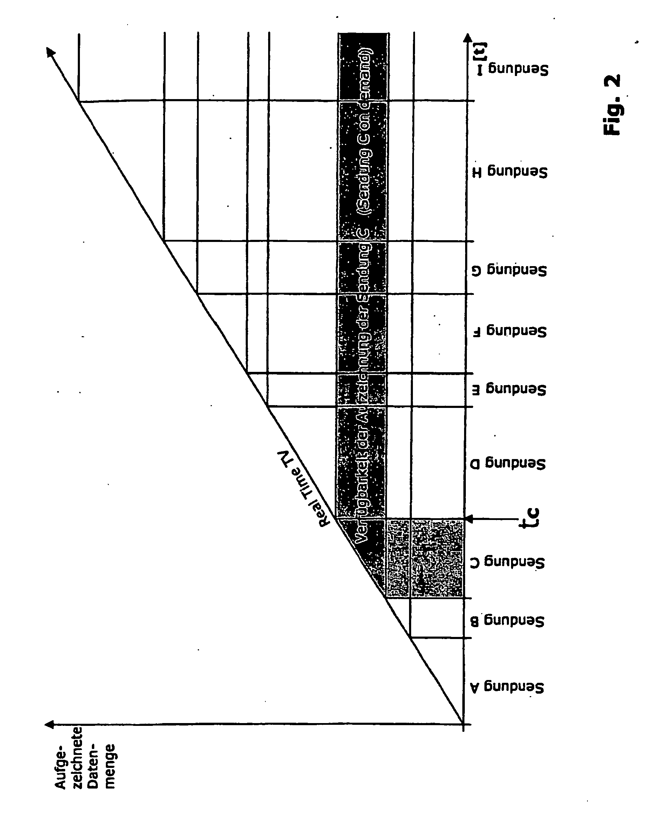

Figur 1 zeigt in schematischer Darstellung ein System zur Bereitstellung von Fernsehdaten (Multimedia-Daten.). Alle TV-Sendungen A bis H eines vorher in Vertrag genommenen Fernsehsenders TV_CH werden in digitalem Format auf einem Server S aufgezeichnet, der als Provider für die weitere Bereitstellung dieser Daten dient. Die Aufzeichnung erfolgt dabei so, dass eine Sendung A bis H entweder als eine einzelne Datei oder in mehrere jeweils einen Sendungsteil repräsentierende Dateien abgespeichert werden. Die Anzahl der Aufzeichnungen einer Sendung und der daraus entstehenden Files kann dabei je nach Anzahl der Konsumenten, welche anschliessend darauf Zugriff haben sollen, verschieden sein. Ungeachtet dessen ist die Anzahl der Aufzeichnungen von der verwendeten Aufzeichnungs- und Datenbereitstellungs- Technologie abhängig. Diese Dateien können nach ihrer Aufzeichnung mittels einer Digital-Subscriber-Line von einer Setupbox BG oder einem anderen dafür vorgesehenen Empfänger mit eindeutiger Adresse abgerufen und an einem Multimediagerät MG, wie z.B. einem Fernsehgerät, einem Multimedia-Computer, abgespielt werden. Die Setupbox BG kann beispielsweise bei einem mobilen Multimediagerät, wie einem Mobiltelefon, einem PDA, einem Tablett-PC, auch in das entsprechende Gerät integriert sein. Unmittelbar nach der Echtzeit Ausstrahlung sind die Aufzeichnungen der jeweiligen Sendungen bzw. der jeweiligen Teilsendungen für den Konsumenten abrufbar, was in Figur 2 beispielhaft für die Sendung C dargestellt wird. Zum zeitpunkt t_{c} ist diese Sendung vollständig auf dem Server S zu deren Abruf bereitgestellt. Teile dieser Sendung sind bereits unmittelbar nach deren Sendebeginn abrufbar sofern sie in der Vergangenheit liegen. Der diese Sendung/Teilsendung auswählende Konsument erhält diese Sendung C bzw. die ausgewählten Teile dieser, welche sein gewählter TV-Sender TV_CH ausgestrahlt hat in digitalem Format in Echtzeit.

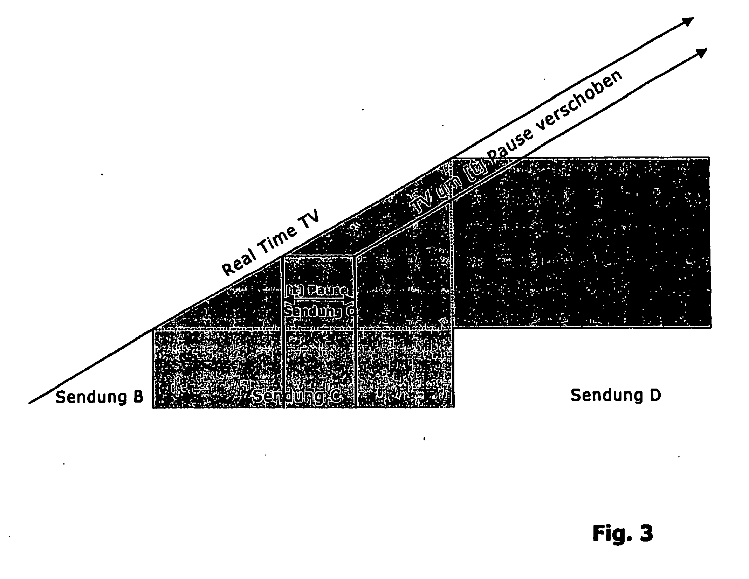

Figur 3 zeigt nun eine Pausierung der Sendung C. Alle folgenden Sendung laufen für den Konsumenten um die Länge der Pause zeitverschoben zum Real Time TV ab. Ein "Springen" zurück in den Real Time Modus ist jederzeit möglich. Dabei werden jedoch Teile dieser Sendung übersprungen.

Füigur 4 zeigt nun die Situation, bei der der Konsument auf den TV-Sender TV_CH schaltet, welcher gerade die Sendung C ausstrahlt. Die Sendung C läuft dabei jedoch schon seit geraumer Zeit. Zum Zeitpunkt X entscheidet sich der Konsument, die Sendung C von Beginn weg anzusehen und springt mittels des auf der Setup-Box laufenden Clients und das am TV-Gerät angezeigte Benutzermenü zum Beginn der gewünschten Sendung, indem dem Server S der Befehl übermittelt wird, dass auf diesem TV-Sender Tv_CH laufende Tv-Programm ab dem Beginn der Sendung C an diesen Adressaten, d.h. an die eindeutige Adresse der Setup-Box zu senden. Damit laufen alle folgenden Sendung für den Konsumenten um die bereits verstrichene zeit zeitverschoben zum Echtzeit-Programm (Real Time TV) ab. Ein "Springen", in den Real Time Modus ist auch hier jederzeit möglich. Dabei werden jedoch hier ebenfalls Teile einer Sendung übersprungen.

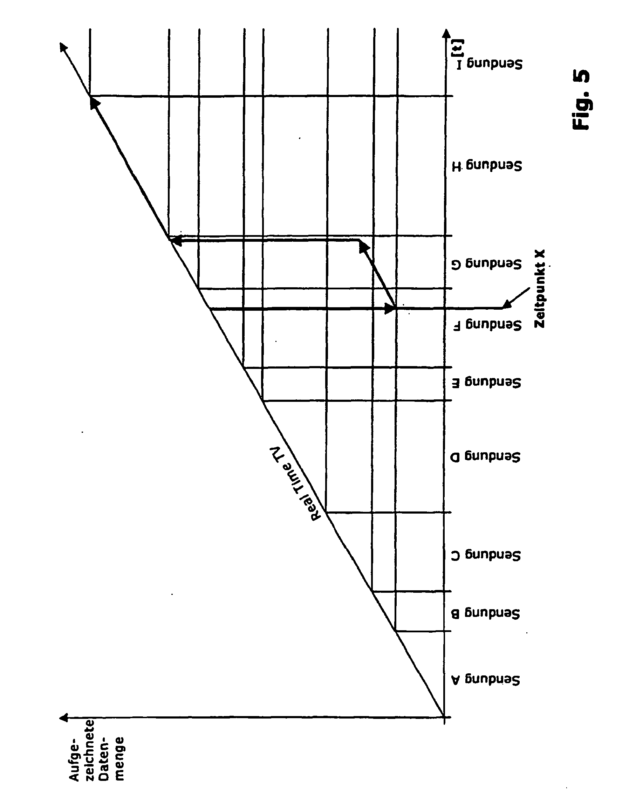

Eine weitere Ausführungsoption für den Konsumenten ist in der Figur 5 repräsentiert. Der Konsument entscheidet sich zum Zeitpunkt X, die Sendung B anzusehen und wählt im Programmführer (d.h. in dem von der Setup-Box bereitgestellten Client mit seinem Benutzermenü) die entsprechende Sendung B aus. Das Streaming der gewünschten Sendung beginnt sofort nach deren Auswahl aufgrund der bidirektionalen mittels eines Kommunikationsnetzwerkes KN bereitgestellten Verbindung von Setup-Box BG und Server S. Die nachfolgenden Sendungen C, D usw, laufen in der Folge zeitverschoben weiter, bis wieder in den Real-Time Modus gesprungen wird. Im grafisch dargestellten Beispiel gemäss Figur 5 entscheidet der Konsument, sich die Sendung H wieder in Originalausstrahlung (Real Time) anzusehen und springt unmittelbar vor deren Beginn in den Real Time Modus.

Für bereits ausgestrahlten Sendungen besteht grundsätzlich auch die Möglichkeit, die gewünschte Sendung als File downzuloaden und dann anzusehen. Die Downloadzeit kann dabei jedoch in Abhängigkeit von der verfügbare Bandbreite für die Datenübertragung sehr zeitintensiv sein und nahe an die zeitliche Dauer der gewünschten Sendung kommen. Darüber hinaus kann die Downloadzeit signifikant verlängert werden, wenn gleichzeitig noch andere Sendungen konsumiert werden.

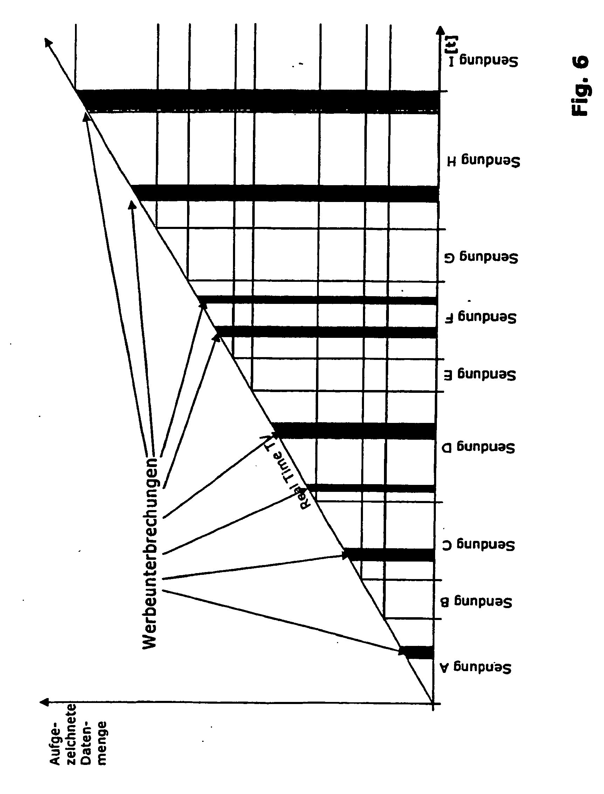

Ein Downloaden einer Sendung bietet jedoch den Vorteil, dass die Datenleitung zum Server S während der Dauer des Betrachtens der besagten Sendung nicht belastet wird und die Sendung beliebig oft wiedergegeben werden kann, ohne zusätzlichen Datenfluss zum und vom Server S. Einzigallein der Möglichkeit von Werbeunterbrechungen, wie sie in Figur 6 aufgezeigt ist und ohne die möglicherweise kaum Verträge mit TV-Sendern TV_CH zu Stande kommen würden, sind mit der Möglichkeit des Downloadens von Sendungen Grenzen gesetzt.

Weiter kann der Konsument auch eine Sendung für sich "reservieren", die beispielsweise erst am folgenden Tag, an welchem er zum besagten Sendezeitpunkt sowie einige Tage danach nicht zu Hause ist, ausgestrahlt wird. Nach seiner Rückkehr kann er im Programmführer auf den Tag "blättern", an-dem die Sendung Real Time übertragen wurde und die Sendung mittels Markierung auswählen.

Die gewünschte Sendung wird dann zum Zeitpunkt, an dem sie Real Time ausgestrahlt wird, aufgezeichnet. Je nach vertraglicher Vereinbarung steht diese dann dem Konsumenten auf einem reservierten Speicherplatz beim Server zur Verfügung, oder sie wurde bereits lokal auf einem Speichermedium beim Konsumenten gespeichert, z.B. in der Setup-Box BG.

Werbeunterbrechungen können je nach vertraglichen Vereinbarungen zwischen Provider (Betreiber des Servers S) und TV-Sender TV_CH, sowie TV-Sender TV_CH und Werber zeitlich fix eingeblendet werden. Bei Konsumenten, welche sich gerade eine Aufzeichnung ansehen, kann die Setup-Box so gesteuert sein, dass die gerade wiedergebene Aufzeichnung für die Dauer der Werbeunterbrechung pausiert und die Werbeunterbrechung stattdessen eingespielt wird (vgl. Fig. 6). Bei Konsumenten, bei denen sich die Aufzeichnung bereits im Pause-Modus befindet, wird die Werbung eingespielt und der Pause-Modus kann frühestens nach Ende der Werbeunterbrechung wieder verlassen werden. Bei Aufzeichnungen, die vorher downgeloaded wurden, ist dies nur beschränkt möglich. Da die Aufzeichnung lokal gespeichert ist, kann beim Ansehen dieser Aufzeichnung die Verbindung physikalisch getrennt werden, wodurch der Provider keinen Einfluss mehr darauf hat, was beim Konsumenten gerade am Bildschirm angezeigt wird. Dasselbe Problem besteht bei Aufzeichnungen, die vorgängig programmiert wurden und lokal gespeichert sind.

Für jeden TV-Sender TV_CH wird ein Programmführer zur Verfügung gestellt. Er dient dazu, wie in den Beispielen erwähnt, eine gewünschte Sendung auszuwählen. Mittels einem einzigen Tastendruck auf der Fernbedienung erscheint das TV-Programm des gerade angewählten Tv-Senders für den aktuellen Tag. Die Sendungen sind nach Sendezeiten aufgelistet, wie dies auch in Programmzeitschriften üblich ist und zum Beispiel auch vom Videotext her bekannt ist. Die aktuell laufende Sendung erscheint beispielsweise in roter Schrift, bereits ausgestrahlte Sendungen erscheinen entsprechend in blauer Schrift, in der Zukunft liegende, noch nicht ausgestrahlte Sendungen erscheinen in einer weiteren anders farbigen Schrift. Bereits ausgestrahlte Sendungen, welche verfügbar sind für Download oder Downstream, erscheinen in grüner Farbe. Mittels einer **auf-** und einer **ab-** Taste wird die gewünschte Sendung angewählt und mittels einer **OK-** oder **Play-**Taste ausgewählt. Mittels einer **vor-** und **zurück-** Taste wird das TV-Programm des Vortages oder des Folgetages angezeigt.

Auch hier können mittels **auf-** und **ab-** Taste wieder die einzelnen Sendungen angewählt werden.

## Patentansprüche

1. Verfahren zur Bereitstellung von Muldmedia-Daten in einer einem Multimedia-Gerät (MG) zugeordneten Baugruppe (BG), umfassend
a) Auswählen mittels einem von einer Baugruppe (BG) unterstützten Client einer oder mehrerer Teilsendungen an einem Multimedla-Gerät (MG);
b) Abrufen, aufgrund der vorherigen Auswahl, eines oder mehrerer Multimedia-Datenfiles aufgrund einer eindeutigen Kennzeichnung, wobei mehrere der Multimedia-Datenfiles jeweils einen Sendungsteil einer Sendung (A bis H) eines Fernsehkanals (TV_CH) repräsentieren und ihre Kennzeichnungen jeweils eine eindeutig teilsendungsspezifische Kennzeichnung ist zum Abruf von einem Server (S), auf dem jeweils die Sendung (A bis H) in einer von der möglichen Anzahl der Abrufvorgänge abhängigen vervielfachten Form abgespeichert wird; und
c) Bereitstellen eines in den Datenfiles gespeicherten Fernsehprogramms des Fernsehkanals (TV_CH) am Multimedia-Gerät (MG) beginnend mit der ausgewählten Teilsendung mit einer Zeitverzögerung, die mindestens so groß ist, wie die Differenz zwischen der tatsächlichen Sendezeit und dem Auswählzeitpunkt.

2. Verfahren nach Anspruch 1,
**dadurch gekennzeichnet, dass**
die von dem Server (S) übertragenen Daten in der Baugruppe (BG) gespeichert werden und mittels des Clients beliebig adressiert werden.

3. Verfahren nach Anspruch 1 oder 2,
**dadurch gekennzeichnet, dass**
mittels des Clients themenbezogene Abonnements von Sendungen (A bis H) und/oder Teilsendungen ausgewählt werden.

4. Verfahren nach einem der Ansprüche 1 bis 3,
**dadurch gekennzeichnet, dass**
mittels des Clients ein benutzerdefiniertes Abonnement zusammengestellt wird und dem Abonnement entsprechende Multimedia-Datenfiles abgerufen und in der Baugruppe (BG) bereitgestellt werden.

5. Verfahren nach einem der Ansprüche 1 bis 4,
**dadurch gekennzeichnet, dass**
mittels des Clients die Bereitstellung einer Sendung (A bis H) bzw. einer Teilsendung an einer beliebigen Stelle unterbrochen wird und später an dieser Stelle fortgesetzt wird oder später in weiter fortgeschrittenem Stadium fortgesetzt wird.

6. Verfahren zur Bereitstellung von Multimedia-Daten mittels eines Servers (S), umfassend
a) Speichern einer Sendung (A bis H) eines Fernsehkanals (TV_CH) in mehreren jeweils einen Sendungsteil repräsentierenden Multimedia-Datenfiles mit jeweils eindeutiger teilsendungsspezifischer Kennzeichnung auf einem Server (5), wobei die Sendung (A bis H) in einer von der möglichen Anzahl der Abrufvorgänge abhängigen vervielfachten Form abgespeichert wird;
b) Erhalten einer Auswahl betreffend die gespeicherten Teilsendungen für ein Multimedia-Gerät (MG);
c) Transferieren, aufgrund der erhaltenen Auswahl, eines oder mehrerer der Multimedia-Datenflies aufgrund ihrer eindeutigen Kennzeichnung vom Server (S) in Richtung des Multimedia-Geräts (MG), wobei
d) ein in den Datenfiles gespeichertes Fernsehprogramm des Fernsehkanals (TV_CH) beginnend mit der ausgewählten Teilsendung zur Bereitstellung am Multimedia-Gerät (MG) mit einer Zeitverzögerung transferiert wird, die mindestens so groß ist, wie die Differenz zwischen der tatsächlichen Sendezeit und dem Auswählzeitpunkt.

7. Verfahren nach Anspruch 6,
**dadurch gekennzeichnet, dass**
der Server (S) so ausgestaltet ist, dass das Bereitstellen der Sendungen (A bis H) sowie Teile derer zwecks Ausstrahlung/Übertragung von Konsumenteninformationssendungen unterbrochen werden kann.

8. Verfahren nach Anspruch 6 oder 7,
**dadurch gekennzeichnet, dass**
die Wiedergabe einer vom Server (S) gelieferten Sendung (A bis H) durch eine entsprechende Signalübermittlung an die Baugruppe für die Dauer einer Verbraucherinformationssendung unterbrochen wird, wenn diese in dem Echtzeit-Programm des der Sendung zuordenbaren TV-Kanals ausgesendet wird.

9. Verfahren nach einem der vorhergehenden Ansprüche,
**dadurch gekennzeichnet, dass**
die Bereitstellung der ausgewählten Teilsendungen im Zuge eines Im wesentlichen kontinuierlichen Datentransports durchgeführt wird.

10. Verfahren nach einem der vorhergehenden Ansprüche,
**dadurch gekennzeichnet, dass**
die Bereitstellung der ausgewählten Teilsendungen im Zuge eines Downloads der entsprechenden Multimedia-Datenfiles durchgeführt wird.

11. Baugruppe (BG) zur Bereitstellung von Multimedia-Daten in der einem Multimedia-Gerät (MG) zugeordneten Baugruppe (BG), mit
a) einem von der Baugruppe (BG) unterstützten Client, mittels dem Teilsendungen an einem Multimedia-Gerät (MG) auswählbar sind;
b) einem Datenübermittlungssystem, mittels dem aufgrund der vorherigen Auswahl ein oder mehrere Multimedia-Datenfiles aufgrund einer eindeutigen Kennzeichnung zu der Baugruppe (BG) transferierbar sind, wobei mehrere der Multimedia-Datenfiles jeweils einen Sendungstell einer Sendung (A bis H) eines Fernsehkanals (TV_CH) repräsentieren und ihre Kennzeichnungen jeweils eine eindeutig teilsendungsspezifische Kennzeichnung ist zum Abruf von einem Server (S), auf dem jeweils die Sendung (A bis H) in einer von der möglichen Anzahl der Abrufvorgänge abhängigen vervielfachten Form abgespeichert ist, und wobei
c) die Baugruppe (BG) und/oder der Client weiter so ausgestattet sind, dass ein In den Datenfiles gespeichertes Fernsehprogramm des Fernsehkanals (TV_CH) beginnend mit der ausgewählten Teilsendung mit einer Zeitverzögerung, die mindestens so groß ist, wie die Differenz zwischen der tatsächlichen Sendezeit und dem Auswählzeitpunkt, am Multimedia-Gerät (MG) bereitstellbar ist.

12. Vorrichtung nach Anspruch 11,
**dadurch gekennzeichnet, dass**
die von dem Server (S) übertragenen Daten in der Baugruppe (BG) speicherbar sind und mittels des Clients beliebig adressierbar sind.

13. Vorrichtung nach Anspruch 11 oder 12,
**dadurch gekennzeichnet, dass**
mittels des Clients themenbezogene Abonnements von Sendungen und/oder Teilsendungen auswählbar sind.

14. Vorrichtung nach einem der Ansprüche 11 bis 13,
**dadurch gekennzeichnet, dass**
mittels des Clients ein benutzerdefiniertes Abonnement zusammenstellbar ist und dem Abonnement entsprechende Multimedia-Datenfiles abrufbar und in der Baugruppe (BG) bereitstellbar sind.

15. Vorrichtung nach einem der Ansprüche 11 bis 14,
**dadurch gekennzeichnet, dass**
mittels des Clients die Bereitstellung einer Sendung (A bis H) bzw. einer Teilsendung an einer beliebigen Stelle unterbrechbar ist und später an dieser Stelle fortsetzbar ist oder später in weiter fortgeschrittenem Stadium fortsetzbar ist.

16. Server (S) zur Bereitstellung von Multimedia-Daten, mit
a) einer Speichereinheit, auf der Sendungen (A bis H) eines Fernsehkanals (TV_CH) in mehreren jeweils einen Sendungsteil repräsentierenden Multimedia-Datenfiles mit jeweils eindeutiger teilsendungsspezifischer Kennzeichnung speicherbar sind, wobei die Speichereinheit die Sendung (A bis H) in einer von der möglichen Anzahl der Abrufvorgänge abhängigen vervielfachten Form abzuspeichern vermag;
b) einem Netzwerkanschluss zum Erhalt einer Auswahl betreffend die gespeicherten Teilsendungen für ein Multimedia-Gerät (MG);
c) einem Datenübermittlungssystem, mittels dem aufgrund der erhaltenen Auswahl eines oder mehrerer der Multimedia-Datenfiles aufgrund ihrer eindeutigen Kennzeichnung von dem Server (S) in Richtung des Multimedia-Geräts (MG) transferierbar sind, wobei
d) ein in den Datenfiles gespeichertes Fernsehprogramm des Fernsehkanals (TV_CH) beginnend mit der ausgewählten Teilsendung zur Bereitstellung am Multimedia-Gerät (MG) mit einer Zeitverzögerung transferiert wird, die mindestens so groß ist, wie die Differenz zwischen der tatsächlichen Sendezeit und dem Auswählzeitpunkt.

17. Vorrichtung nach Anspruch 16,
**dadurch gekennzeichnet, dass**
der Server (S) so ausgestaltet ist, dass das Bereitstellen der Sendungen (A bis H) sowie Teile derer zwecks Ausstrahlung/Übertragung von Konsumenteninformationssendungen unterbrochen werden kann.

18. Vorrichtung nach Anspruch 16 oder 17,
der Server (S) so ausgestaltet sind, dass das Bereitstellen der Sendungen (A bis H) sowie Teile derer zwecks Ausstrahlung/Übertragung von Konsumenteninformationssendungen auf diesem der Sendung zuordenbaren TV-Kanal (TV_CH) unterbrechbar ist.

19. Vorrichtung nach einem der Ansprüche 11 bis 18,
**dadurch gekennzeichnet, dass**
der Server (S) und die Baugruppe (BG) ausgebildet sind, so zusammenzuwirken, dass die Bereitstellung der ausgewählten Sendungen (A bis H) bzw. Teilsendungen im Zuge eines im wesentlichen kontinuierlichen Datentransports durchführbar ist.

20. Vorrichtung nach einem der Ansprüche 11 bis 19,
**dadurch gekennzeichnet, dass**
der Server (S) und die Baugruppe (BG) ausgebildet sind, so zusammenzuwirken, dass die Bereitstellung der ausgewählten Sendungen (A bis H) bzw. Teilsendungen im Zuge eines Downloads der entsprechenden Multimedia-Datenfiles durchführbar ist.

## Claims

1. A method of providing multimedia data in an assembly (BG) assigned to a multimedia device (MG), comprising
a) selecting one or more program portions at a multimedia device (MG) using a client supported by an assembly (BG);
b) retrieving, based on the previous selection, one or more multimedia data files based on a unique identification, wherein a plurality of the multimedia data files respectively represents a program part of a program (A to H) of a television channel (TV_CH) and their respective identifications is a unique identification specific to a program portion for the retrieval from a server (S), on which the respective program (A to H) is stored in a multiplied form depending on the potential number of retrieval events; and
c) providing, at the multimedia device (MG), a television program of the television channel (TV_CH) stored in the data files starting with the selected program portion with a time delay that is at least as large as the difference between the actual program time and a time of the selection.

2. The method of claim 1,
**characterized in that**
the data transmitted from the server (S) are stored in the assembly (BG) and discretionarily addressed using the client.

3. The method of claim 1 or 2,
**characterized in that**
using the client, theme-related subscriptions of programs (A to H) and/or program portions are selected.

4. The method of any one of claims 1 to 3,
**characterized in that**
using the client, a user-defined subscription is composed and multimedia data files corresponding to the subscription are retrieved and provided in the assembly (BG).

5. The method of any one of claims 1 to 4,
**characterized in that**
using the client, the provision of a program (A to H) or a program portion, respectively, is interrupted at an discretionary position and is continued later at the position or is continued later in a further advanced state.

6. A method of providing multimedia data using a server (S), comprising
a) storing, on a server (S), a program (A to H) of a television channel (TV_CH) in a plurality of multimedia data files, each of which represents a program part having a respective unique identification specific to a program portion, wherein the program (A to H) is stored in a multiplied form depending on the potential number of retrieval events;
b) obtaining a selection relating to the stored program portions for a multimedia device (MG);
c) transferring, based on the obtained selection, one or more of the multimedia data files based on their unique identification from the server (S) towards the multimedia device (MG), wherein
d) a television program of the television channel (TV_CH) stored in the data files is transferred starting with the selected program portion for the provision at the multimedia device (MG) with a time delay that is at least as large as the difference between the actual program time and a time of the selection.

7. The method of claim 6,
**characterized in that**
the server (S) is configured such that the provision of the programs (A to H) as well as portions thereof can be interrupted for broadcast/transmission of consumer information programs.

8. The method of claim 6 or 7,
**characterized in that**
the rendering of a program (A to H) delivered from the server (S) by a corresponding signal transmission to the assembly is interrupted for the duration of a customer information program, when the customer information program is broadcasted in the real-time program of the TV channel assignable to the program.

9. The method of any one of the preceding claims,
**characterized in that**
the provision of the selected program portions is performed in the course of an essentially continuous data transport.

10. The method of any one of the preceding claims,
**characterized in that**
the provision of the selected program portions is performed in the course of a download of the corresponding multimedia data files.

11. An assembly (BG) for providing multimedia data in the assembly (BG) assigned to a multimedia device (MG), comprising
a) a client supported by the assembly (BG), wherein program portions are selectable at a multimedia device (MG) using the client;
b) a data transmission system adapted to transfer, based on the previous selection, one or more multimedia data files based on a unique identification to the assembly (BG), wherein a plurality of the multimedia data files respectively represents a program part of a program (A to H) of a television channel (TV_CH) and their respective identification is a unique identification specific to a program portion for the retrieval from a server (S), on which the respective program (A to H) is stored in a multiplied form depending on the potential number of retrieval events, and wherein
c) the assembly (BG) and/or the client is further configured such that a television program of the television channel (TV_CH) stored in the data files is providable at the multimedia device (MG) starting with the selected program portion with a time delay that is at least as large as the difference between the actual program time and a time of the selection.

12. The device of claim 11,
**characterized in that**
the data transmitted from the server (S) are storable in the assembly (BG) and discretionarily addressable using the client.

13. The device of claim 11 or 12,
**characterized in that**
using the client, theme-related subscriptions of programs (A to H) and/or program portions are selectable.

14. The device of any one of claims 11 to 13,
**characterized in that**
using the client, a user-defined subscription is composable and multimedia data files corresponding to the subscription are retrievable and providable in the assembly (BG).

15. The device of any one of claims 11 to 14,
**characterized in that**
using the client, the provision of a program (A to H) or a program portion, respectively, is interruptable at a discretionary position and is continuable later at the position or is continuable later in a further advanced state.

16. A server (S) for providing multimedia data, comprising
a) a storage unit adapted to store programs (A to H) of a television channel (TV_CH) in a plurality of multimedia data files, each of which representing a program part having a respective unique identification specific to a program portion, wherein the storage unit is adapted to store the program (A to H) in a multiplied form depending on the potential number of retrieval events;
b) a network adaptor adapted to obtain a selection relating to the stored program portions for a multimedia device (MG);
c) a data transmission system adapted to transfer, based on the obtained selection, one or more of the multimedia data files based on their unique identification from the server (S) towards the multimedia device (MG), wherein
d) a television program of the television channel (TV_CH) stored in the data files is transferred starting with the selected program portion for provision at the multimedia device (MG) with a time delay that is at least as large as the difference between the actual program time and a time of the selection.

17. The device of claim 16,
**characterized in that**
the server (S) is configured such that the provision of the programs (A to H) as well as portions thereof is interruptable for broadcast/transmission of consumer information programs.

18. The device of claim 16 or 17,
**characterized in that**
the server (S) is configured such that the provision of the programs (A to H) as well as of portions thereof is interruptable on the TV channel (TV_CH) assignable to the program for broadcast/transmission of consumer information programs.

19. The device of any one of claim 11 to 18,
**characterized in that**
the server (S) and the assembly (BG) are adapted to interact such that the provision of the selected programs (A to H) or program portions, respectively, is performable in the course of an essentially continuous data transport.

20. The device of any one of claims 11 to 19,
**characterized in that**
the server (S) and the assembly (BG) are adapted to interact such that the provision of the selected programs (A to H) or program portions, respectively, are performable in the course of a download of the corresponding multimedia data files.

## Revendications

1. Procédé pour mettre à disposition des données multimédia dans un boîtier récepteur d'adaptation (BG) associé à un appareil multimédia (MG), englobant
a) la sélection, à l'aide d'un client supporté par un boîtier récepteur d'adaptation (BG), d'une ou de plusieurs émissions partielles sur un appareil multimédia (MG) ;
b) l'acquisition, sur la base de la sélection précédente, d'un ou de plusieurs fichiers de données multimédia sur la base d'une caractéristique d'identification univoque, plusieurs desdits fichiers de données multimédia représentant chacun respectivement une partie d'émission d'une émission (A à H) d'un canal de télévision (TV_CH), et leurs caractéristiques d'identification étant chacune respectivement une caractéristique d'identification univoque spécifique à l'émission partielle, pour l'acquisition à partir d'un serveur (S) dans lequel est mémorisée respectivement l'émission (A à H) sous une forme multiple fonction du nombre possible des opérations d'acquisition ; et
c) la mise à disposition, dans l'appareil multimédia (MG), d'un programme de télévision du canal de télévision (TV_CH) mémorisé dans les fichiers de données, débutant avec l'émission partielle sélectionnée, avec un retard dans le temps qui est au moins aussi grand que la différence entre l'heure d'émission effective et l'instant de sélection.

2. Procédé selon la revendication 1,
**caractérisé en ce que** les données transférées par le serveur (S) sont mémorisées dans le boîtier récepteur d'adaptation (BG) et sont adressées au choix à l'aide du client.

3. Procédé selon la revendication 1 ou la revendication 2,
**caractérisé en ce qu'**à l'aide du client sont sélectionnés des abonnements se référant à des thèmes, parmi des émissions (A à H) et/ou des émissions partielles.

4. Procédé selon l'une des revendications 1 à 3,
**caractérisé en ce qu'**à l'aide du client est élaboré un abonnement défini par l'utilisateur, et est effectuée l'acquisition des fichiers de données multimédia correspondant à l'abonnement, qui sont alors mis à disposition dans le boîtier récepteur d'adaptation (BG).

5. Procédé selon l'une des revendications 1 à 4,
**caractérisé en ce qu'**à l'aide du client, la mise à disposition d'une émission (A à H) ou d'une émission partielle est interrompue à un endroit quelconque et est poursuivie ultérieurement à cet endroit ou est poursuivie ultérieurement à un stade plus avancé.

6. Procédé pour mettre à disposition des données multimédia au moyen d'un serveur (S), englobant
a) la mémorisation dans un serveur (S), d'une émission (A à H) d'un canal de télévision (TV_CH) dans plusieurs fichiers de données multimédia représentant chacun une partie d'émission et ayant chacun une caractéristique d'identification univoque spécifique à l'émission partielle, l'émission (A à H) étant mémorisée sous une forme multiple fonction du nombre possible des opérations d'acquisition ;
b) la réception d'une sélection concernant les émissions partielles mémorisées, pour un appareil multimédia (MG) ;
c) le transfert, sur la base de la sélection reçue, d'un ou plusieurs des fichiers de données multimédia sur la base de leur caractéristique d'identification univoque, du serveur (S) vers l'appareil multimédia (MG),
d) un programme de télévision du canal de télévision (TV_CH), mémorisé dans les fichiers de données, débutant avec l'émission partielle sélectionnée, étant transféré, pour la mise à disposition sur l'appareil multimédia (MG), avec un retard dans le temps qui est au moins aussi grand que la différence entre l'heure d'émission effective et l'instant de sélection.

7. Procédé selon la revendication 6,
**caractérisé en ce que** le serveur (S) est conçu pour que la mise à disposition des émissions (A à H) ainsi que de parties de celles-ci, puisse être interrompue, en vue d'émettre/transmettre des émissions d'informations de consommateur.

8. Procédé selon la revendication 6 ou la revendication 7,
**caractérisé en ce que** la lecture d'une émission (A à H) fournie par le serveur (S), est interrompue, par une transmission de signal adéquate au boîtier récepteur d'adaptation, pour la durée d'une émission d'information de consommateur, lorsque celle-ci est émise dans le programme en temps réel du canal de TV pouvant être associé à l'émission.

9. Procédé selon l'une des revendications précédentes,
**caractérisé en ce que** la mise à disposition des émissions partielles sélectionnées est effectuée au cours d'un transport de données sensiblement continu.

10. Procédé selon l'une des revendications précédentes,
**caractérisé en ce que** la mise à disposition des émissions partielles sélectionnées est effectuée au cours d'un téléchargement des fichiers de données multimédia correspondants.

11. Boîtier récepteur d'adaptation (BG) pour mettre à disposition des données multimédia dans le boîtier récepteur d'adaptation (BG) associé à un appareil multimédia (MG), comprenant
a) un client supporté par le boîtier récepteur d'adaptation (BG), à l'aide duquel peuvent être sélectionnées des émissions partielles sur un appareil multimédia (MG) ;
b) un système de transmission de données, au moyen duquel, sur la base de la sélection précédente, un ou plusieurs fichiers de données multimédia peuvent être transférés au boîtier récepteur d'adaptation (BG) sur la base d'une caractéristique d'identification univoque, plusieurs des fichiers de données multimédia représentant chacun respectivement une partie d'émission d'une émission (A à H) d'un canal de télévision (TV_CH), et leurs caractéristiques d'identification étant chacune respectivement une caractéristique d'identification univoque spécifique à l'émission partielle, pour l'acquisition à partir d'un serveur (S) dans lequel est mémorisée respectivement l'émission (A à H) sous une forme multiple fonction du nombre possible des opérations d'acquisition, et
c) le boîtier récepteur d'adaptation (BG) et/ou le client étant par ailleurs conçus de façon telle qu'un programme de télévision du canal de télévision (TV_CH) mémorisé dans les fichiers de données, débutant avec l'émission partielle sélectionnée, puisse être mis à disposition sur l'appareil multimédia (MG) avec un retard dans le temps qui est au moins aussi grand que la différence entre l'heure d'émission effective et l'instant de sélection.

12. Dispositif selon la revendication 11,
**caractérisé en ce que** les données transférées par le serveur (S) peuvent être mémorisées dans le boîtier récepteur d'adaptation (BG) et peuvent être adressées au choix à l'aide du client.

13. Dispositif selon la revendication 11 ou la revendication 12,
**caractérisé en ce qu'**à l'aide du client peuvent être sélectionnés des abonnements se référant à des thèmes, parmi des émissions et/ou des émissions partielles.

14. Dispositif selon l'une des revendications 11 à 13,
**caractérisé en ce qu'**à l'aide du client peut être élaboré un abonnement défini par l'utilisateur, et être effectuée une demande d'acquisition des fichiers de données multimédia correspondant à l'abonnement, qui peuvent alors être mis à disposition dans le boîtier récepteur d'adaptation (BG).

15. Dispositif selon l'une des revendications 11 à 14,
**caractérisé en ce qu'**à l'aide du client, la mise à disposition d'une émission (A à H) respectivement d'une émission partielle, peut être interrompue à un endroit quelconque et être poursuivie ultérieurement à cet endroit ou être poursuivie ultérieurement à un stade plus avancé.

16. Serveur (S) pour mettre à disposition des données multimédia, comprenant
a) une unité de mémoire, dans laquelle peuvent être mémorisées des émissions (A à H) d'un canal de télévision (TV_CH) dans plusieurs fichiers de données multimédia représentant chacun une partie d'émission et ayant chacun une caractéristique d'identification univoque spécifique à l'émission partielle, l'unité de mémoire étant apte à mémoriser l'émission (A à H) sous une des formes multiples fonction du nombre possible des opérations d'acquisition ;
b) un raccord de branchement à un réseau pour la réception d'une sélection concernant les émissions partielles mémorisées, pour un appareil multimédia (MG) ;
c) un système de transmission de données, au moyen duquel, sur la base de la sélection reçue, un ou plusieurs des fichiers de données multimédia sur la base de leur caractéristique d'identification univoque, peuvent être transférés du serveur (S) vers l'appareil multimédia (MG),
d) un programme de télévision du canal de télévision (TV_CH), mémorisé dans les fichiers de données, qui débute avec l'émission partielle sélectionnée, étant transféré, pour la mise à disposition sur l'appareil multimédia (MG), avec un retard dans le temps qui est au moins aussi grand que la différence entre l'heure d'émission effective et l'instant de sélection.

17. Dispositif selon la revendication 16,
**caractérisé en ce que** le serveur (S) est conçu pour que la mise à disposition des émissions (A à H) ainsi que de parties de celles-ci, puisse être interrompue, en vue d'émettre/transmettre des émissions d'informations de consommateur.

18. Dispositif selon la revendication 16 ou la revendication 17,
**caractérisé en ce que** le serveur (S) est conçu pour que la mise à disposition des émissions (A à H) ainsi que de parties de celles-ci, puisse être interrompue, en vue d'émettre/transmettre des émissions d'informations de consommateur, sur le canal de télévision (TV_CH) pouvant être associé à l'émission.

19. Dispositif selon l'une des revendications 11 à 18,
**caractérisé en ce que** le serveur (S) et le boîtier récepteur d'adaptation (BG) sont conçus pour coopérer de telle manière que la mise à disposition des émissions (A à H) ou des émissions partielles sélectionnées peut être effectuée au cours d'un transport de données sensiblement continu.

20. Dispositif selon l'une des revendications 11 à 19,
**caractérisé en ce que** le serveur (S) et le boîtier récepteur d'adaptation (BG) sont conçus pour coopérer de telle manière que la mise à disposition des émissions (A à H) ou des émissions partielles sélectionnées peut être effectuée au cours d'un téléchargement des fichiers de données multimédia correspondants.
